# EUROPEAN PATENT SPECIFICATION

(11) **EP 3 971 552 B1**
(45) Date of publication and mention of the grant of the patent: **12.03.2025**
(21) Application number: 19928608.9
(22) Date of filing: 24.12.2019
(51) Int. Cl.: G01N 21/01, G01N 21/76, G01N 21/03

(54) **LIGHT AVOIDANCE STRUCTURE FOR DETECTING OPTICAL SIGNAL**
LICHTVERMEIDUNGSSTRUKTUR ZUR DETEKTION EINES OPTISCHEN SIGNALS
STRUCTURE D'ÉVITEMENT DE LUMIÈRE POUR DÉTECTER UN SIGNAL OPTIQUE

(30) Priority: 14.05.2019 CN 201910399882
(43) Date of publication of application: 23.03.2022
(73) Proprietor: Shenzhen Yhlo Biotech Co., Ltd., 518116 Shenzhen (CN)
(72) Inventor: ZHANG, Fuxing, Shenzhen, Guangdong 518116 (CN); XIAO, Yujin, Shenzhen, Guangdong 518116 (CN); HU, Kunhui, Shenzhen, Guangdong 518116 (CN)
(74) Representative: Michalski Hüttermann & Partner Patentanwälte mbB
(86) International application number: PCT/CN2019/127919
(87) International publication number: WO 2020/228335

(56) References cited:
- CN-A- 109 580 591
- CN-A- 109 580 592
- CN-A- 109 580 593
- CN-A- 109 580 593
- CN-A- 110 006 825
- CN-U- 205 484 064
- CN-U- 206 818 612
- CN-U- 207 318 502
- KR-A- 20170 099 607

## Description

### TECHNICAL FIELD

The present invention relates to the technical field of detecting equipment, in particular to a light-avoiding structure for optical signal detection.

### BACKGROUND

In the field of inspection equipment, a lot of instruments and equipment need to use photosensitive devices such as a photomultiplier tube to measure weak optical signal. An example is a chemiluminescence apparatus. Chemiluminescence refers to light emitted by using energy produced by a chemical reaction, for example, light emitted by a molecule when the module is excited by a chemical reaction into an excited state and returns from the excited state to a ground state. In another example, light is produced by a reaction of an enzyme with a substrate, by the application of electrochemical stimulation to a labeled substance, by LOCI (Luminescent Oxygen Channeling Immunoassay), or by bioluminescence. Chemiluminescence determination refers to the determination of chemiluminescence. Therefore, in chemiluminescence determination, it is necessary to construct a darkroom environment for the photosensitive devices to avoid light. A darkroom is a space surrounded by light shielding portions. Darkrooms are not specifically defined provided that they are dark spaces where chemiluminescence can be detected stably. For example, an anechoic chamber is a space surrounded by light shielding portions in such a way that the number of incident photons detected in the anechoic chamber is less than 10000 per mm²·s when there is no chemiluminescence in a box.

The conventional light-avoiding structure for chemiluminescence determination generally achieves light avoidance by providing a completely closed darkroom. Its disadvantage is that structures of the equipment need to be increased. For example, a clamshell mechanism for completely closing a reaction chamber is provided, which makes the structures of the equipment complicated.

CN 206818612 U refers to a sample test device wherein a: shell is positioned on the bearing piece in the shell and is used for detecting the luminescence of the reaction cup; wherein the bearing piece is provided with an accommodating groove, the bottom of the accommodating groove is provided with a supporting plate, and the supporting plate is provided with a placing hole for placing the reaction cup; the detector is connected with the shell in a sealing mode, and the shell, the detector and the accommodating groove can be arranged opposite to the detector form a detection cavity.

CN 109580593 A refers to a reaction cup rotating disc, a measuring chamber and a chemiluminiscence detector.

### SUMMARY

Based on this, the present invention, defined in appended independent claim 1, provides a light-avoiding structure for optical signal detection, which can effectively solve the problem of light leakage in a darkroom by means of an annular structure for shielding light arranged between a cover plate and a rotating body, is simple in structure, and reduces influences on the equipment.

A light-avoiding structure for optical signal detection includes:
a base provided with an accommodating slot;
a rotating body rotatably connected to the base; the rotating body being received in the accommodating slot; the rotating body being provided with a first light shielding member; the rotating body being provided with at least one cup hole; the cup hole being provided with a detection port serving as a signal input port of a photosensitive device; and
a cover plate arranged toward the rotating body; the cover plate covering an opening of the accommodating slot; the cover plate being provided with a second light shielding member; the second light shielding member and the first light shielding member matching each other so as to form an annular structure for shielding light, and a gap being provided at a joint between the second light shielding member and the first light shielding member; the detection port being located at an outer side of the first light shielding member and the second light shielding member; and the cover plate being provided with at least one hole;
wherein the first light shielding member is a groove, and the second light shielding member is a convex ring.

According to the aforementioned light-avoiding structure for chemiluminescence determination, the base, the rotating body, and the cover plate constitute a darkroom for optical signal detection. An annular structure for shielding light composed of the first light shielding member and the second light shielding member is provided between the cover plate and the rotating body. When external light is incident on the hole of the cover plate and on the cup hole of the rotating body, based on the principle of straight line propagation of light, the light propagating in the straight line will be blocked by the annular structure constituted between the cover plate and the rotating body, such that the light is difficult to be incident on the photosensitive device at the detection port, so as to achieve the purpose of avoiding light. In addition, the gap provided at the joint between the first light shielding member and the second light shielding member can ensure that the rotating body is rotatable with respect to the cover plate. The above design can effectively solve the problem of light leakage in the darkroom by means of the annular structure for shielding light arranged between the cover plate and the rotating body, the structure is simple, and the influence on equipment is reduced.

In one embodiment, a width of the gap is no greater than 1 mm. The gap between the first light shielding member and the second light shielding member is set within a range of no greater than 1 mm, so that the probability of light entering a mounting hole through diffuse reflection and other means can be reduced.

In one embodiment, the cover plate is detachably connected to the base or hinged to the base.

In one embodiment, there are a plurality of first light shielding members that are concentric structures arranged with a rotating shaft of the rotating body as the center, and the number of the first light shielding members is inversely proportional to a diameter of the cover plate.

In one embodiment, there are a plurality of second light shielding members that are concentric structures arranged with a rotating shaft of the rotating body as the center, and the number of the second light shielding members is inversely proportional to a diameter of the cover plate.

In one embodiment, the cover plate is provided with a side of the first light shielding member and the rotating body is provided with a side of the second light shielding member with a low-light treatment layer. The low-light treatment layer is used to reduce diffuse reflection of light between the first light shielding member and the second light shielding member.

In one embodiment, the low-light treatment layer is a blackening layer or a matte oxide layer.

In one embodiment, the light-avoiding structure for chemiluminescence determination further includes an actuator connected to the rotating body; the actuator is used to drive the rotating body to rotate.

### BRIEF DESCRIPTION OF THE DRAWINGS

FIG. 1 is a schematic view of a light-avoiding structure for optical signal according to an embodiment of the invention;
FIG. 2 is a schematic semi-sectional view of the light-avoiding structure for optical signal shown in FIG. 1;
FIG. 3 is a schematic semi-sectional view of another perspective of the light-avoiding structure for optical signal shown in FIG. 2;
FIG. 4 is a schematic partial diagram of the light-avoiding structure for optical signal shown in FIG. 3;
FIG. 5 shows another implementation of a cover plate and a rotating body in the light-avoiding structure for optical signal shown in FIG. 4;
FIG. 6 shows a further implementation of the cover plate and the rotating body in the light-avoiding structure for optical signal shown in FIG. 4;
FIG. 7 is a partial schematic view of the light-avoiding structure for optical signal shown in FIG. 1; and
FIG. 8 is a schematic view of a cover plate in the light-avoiding structure for optical signal shown in FIG. 1.

Reference numerals in the drawings are as follows:
100: light-avoiding structure for optical signal detection;
10: base;
20: rotating body, 21: first light shielding member, 22: cup hole, 221: detection port;
30: cover plate, 31: second light shielding member, 311: gap; 32: hole;
40: actuator, 41: motor, 42: synchronous belt;
50: photosensitive device.

### DETAILED DESCRIPTION OF THE EMBODIMENTS

In order to facilitate the understanding of the invention, a more comprehensive description of the invention will be given with reference to the relevant accompanying drawings. Preferred embodiments of the invention are given in the accompanying drawings. However, within the scope defined by the appended claims, the invention may be implemented in many different forms and is not limited to the embodiments described herein. Rather, these embodiments are provided to provide a more thorough and comprehensive understanding of the disclosure of the invention.

It should be noted that, when one element is referred to as "fixed to" another element, it may be directly on another element or there may be an intermediate element. When one element is referred to as "connected to" another element, it may be directly connected to another element or there may be an intermediate element.

Unless otherwise defined, all technical and scientific terms used herein have the same meanings generally understood by those skilled in the art. The terms used in the specification of the invention are intended only to describe specific embodiments and are not intended to limit the present disclosure.

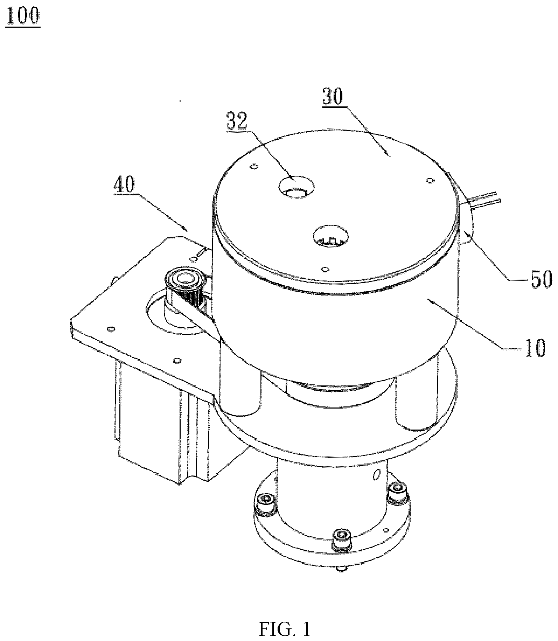

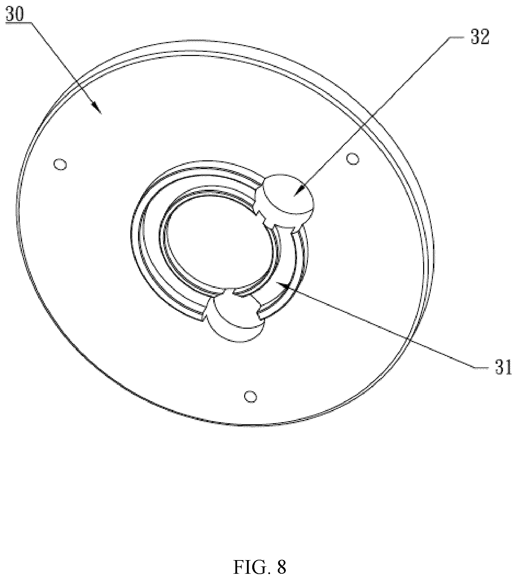

As shown in FIG. 1 to FIG. 8, a light-avoiding structure 100 for optical signal detection according to an embodiment of the invention is provided.

As shown in FIG. 1 to FIG. 7, the light-avoiding structure 100 for optical signal detection includes: a base 10, a rotating body 20 rotatably connected to the base 10, and a cover plate 30 arranged toward the rotating body 20.

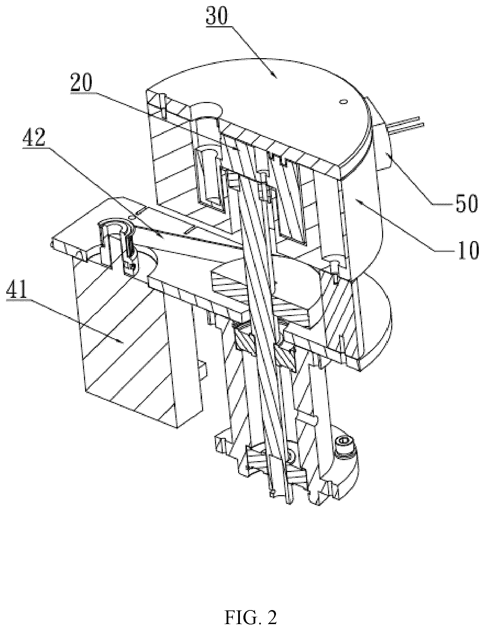

As shown in FIG. 2, FIG. 3, and FIG. 7, the base 10 is provided with an accommodating slot for receiving the rotating body 20. In the present embodiment, the base 10 is further provided with a mounting hole (not labeled) for mounting a photosensitive device 50. The cover plate 30 covers an opening of the accommodating slot. The base 10 can receive the rotating body 20, and it can cooperatively construct a darkroom required for optical signal detection with the cover plate 30.

Further, for ease of operation, the cover plate 30 is detachably connected to the base 10 or is hinged to the base 10.

In addition, the base 10 currently shown in the present embodiment is a U-shaped structure in coordination with the rotating body 20, which may also have a lot of variants, as long as it can match the rotating body 20. For example, the photosensitive device may be mounted inside the base 10, with the detection port facing inward, or it can be disassembled into a plurality of parts.

As shown in FIG. 2, FIG. 3, and FIG. 7, the rotating body 20 is provided with a first light shielding member 21. The rotating body 20 is provided with at least one cup hole 22. The cup hole 22 is provided with a detection port 221. The detection port 221 serves as a signal input port for the photosensitive device 50. In the present embodiment, the first light shielding member is a circular ring structure with a rotating shaft of the rotating body 20 as a center. The cup hole 22 is located on the first light shielding member 21. In other embodiments, the cup hole 22 may also be located outside the first light shielding member 21. In addition, a specific location of the detection port 221 can be changed according to a mounting position of a photosensitive element (also corresponding to a position of the mounting hole). For example, in the present embodiment, the detection port 221 is located on one side of the cup hole 22 away from the rotating shaft of the rotating body 20 and is arranged inward. In other embodiments, the detection port 221 may also be arranged on one side of the cup hole 22 adjacent to the rotating shaft of the rotating body 20 and is arranged outward.

The cup hole 22 is used to accommodate an object for photoelectric detection, such as a reaction vessel. In the present embodiment, the reaction vessel is not drawn. In the present embodiment, three cup holes 22 are provided. In other embodiments, there may be one, two, four, or more cup holes. The more cup holes 22, the more stations can be provided, which is conducive to increase the processing speed of the equipment. During operation, the cup hole 22 rotates with the rotation of the rotating body 20. When the cup hole 22 rotates to a detection end of the photosensitive device 50, the detection port 221 on a side wall of the cup hole 22 can allow the detection end of the photosensitive device 50 to detect an optical signal generated by reactants in the reaction vessel.

As shown in FIG. 2, FIG. 3, and FIG. 8, the cover plate 30 is provided with a second light shielding member 31. The second light shielding member 31 and the first light shielding member 21 match each other, so as to form an annular structure for shielding light. A gap 311 is provided at a joint between the second light shielding member 31 and the first light shielding member 21. The detection port 221 is located outside the first light shielding member 21 and the second light shielding member 31. The cover plate 30 is provided with at least one hole 32. A projection of the hole 32 along the rotating shaft of the rotating body 20 is located on a rotation trajectory of the cup hole 22. The hole 32 is misaligned with the mounting hole. In the present embodiment, the second light shielding member 31 is a circular ring structure with a rotating shaft as the center. The hole 32 is arranged opposite to the cup hole 22. In the present embodiment, the hole is located in the second light shielding member 31. Likewise, in other embodiments, the hole 32 may also be located outside the second light shielding member 31.

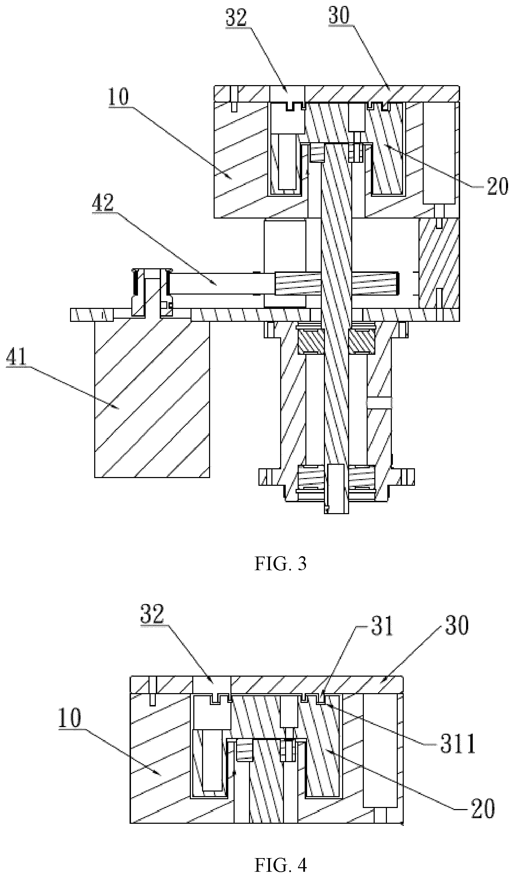

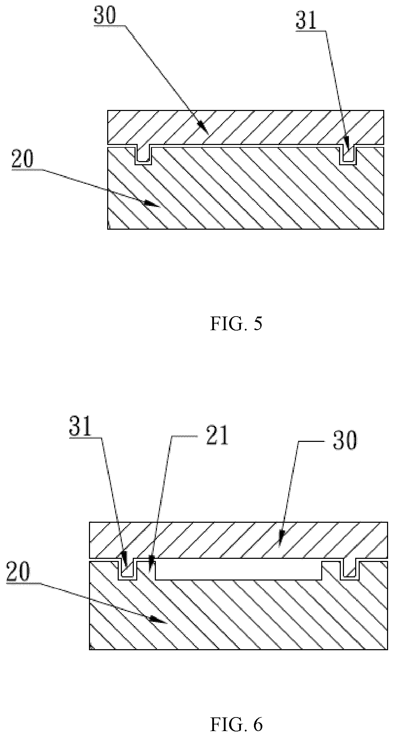

As shown in FIG. 3, the first light shielding member 21 is a convex ring, and the second light shielding member 31 is a groove. In the present invention, the first light shielding member 21 is a groove, and the second light shielding member 31 is a convex ring. As comparative example, shown in FIG. 5, the first light shielding member 21 and the second light shielding member 31 may both be convex rings and mutually sleeved.

In addition, in the present embodiment, there are a plurality of first light shielding members 21, which are concentric structures arranged with a rotating shaft of the rotating body 20 as the center. The number of the first light shielding members 21 is inversely proportional to a diameter of the cover plate 30. Similarly, in the present embodiment, there may also be a plurality of second light shielding members 31, which are concentric structures arranged with a rotating shaft of the rotating body 20 as the center. The number of the second light shielding members 31 is inversely proportional to a diameter of the cover plate 30. That is, with the decrease of the diameter of the cover plate 30, the number of the first light shielding members 21 and the number of the second light shielding members 31 are increased to improve the blocking capability of the light propagating in the straight line. It should be understood that in other embodiments, as shown in FIG. 4, only one first light shielding member 21 and one second light shielding member 31 are provided.

Considering that there may be diffuse reflection when the light is incident to the gap 311 at the junction between the first light shielding member 21 and the second light shielding member 31, a width of the gap 311 is less than 1 mm in the present embodiment. Since the gap 311 between the first light shielding member 21 and the second light shielding member 31 is set within the range of no greater than 1 mm, the probability of the light incident to the photosensitive device 50 through diffuse reflection and other means will be reduced.

In addition, in the present embodiment, a low-light treatment layer is provided on a side of the cover plate 30 that is provided with the first light shielding member 21, and a low-light treatment layer is provided on a side of the rotating body 20 that is provided with the second light shielding member 31. The low-light treatment layer is used to weaken diffuse reflection of the light between the first light shielding member 21 and the second light shielding member 31.

Further, the low-light treatment layer may be a blackening layer or a matte oxide layer.

The hole 32 is used to operate the cup hole 22 of the rotating body 20, through which for example, the reaction vessel can be placed in or taken out, or a reaction liquid can be added to or remove from the reaction vessel.

In the present embodiment, the number of the hole 32 on the cover plate 30 is two; in other embodiments, the number of the holes 32 may also be three, four or more, or one. The holes 32 are used to operate the cup hole 22 of the rotating body 20, through which for example, the reaction vessel can be placed in or taken out, or a reaction liquid can be added to or remove from the reaction vessel. Therefore, the more holes 32, the more stations corresponding to the cup holes 22, which is conducive to increase the working efficiency of the equipment.

As shown in FIG. 1, FIG. 2, and FIG. 7, in the present embodiment, the light-avoiding structure for chemiluminescence determination may further include an actuator 40 connected to the rotating body 20. The actuator 40 is used to drive the rotating body 20 to rotate.

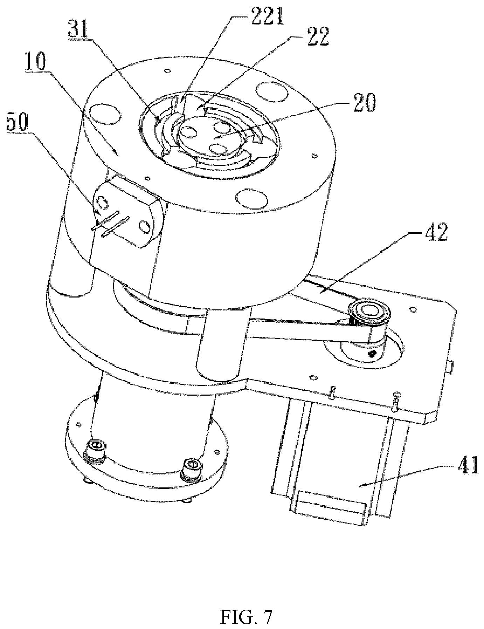

Further, as shown in FIG. 2 and FIG. 7, the actuator 40 may further include a motor 41 provided outside the base 10. The motor 41 is connected to the rotating shaft of the rotating body 20 via a synchronous belt 42, so as to drive the rotating body 20 to rotate. In other embodiments, the motor 41 may also be directly connected to the rotating shaft of the rotating body 20 or driven by a gear.

According to the aforementioned light-avoiding structure for chemiluminescence determination, the base 10, the rotating body 20, and the cover plate 30 constitute a darkroom for optical signal detection. An annular structure for shielding light composed of the first light shielding member 21 and the second light shielding member 31 is provided between the cover plate 30 and the rotating body 20, and the hole 32 on the cover plate 30 is misaligned with the mounting hole for mounting the photosensitive device 50. When external light is incident on the hole 32 of the cover plate 30 and on the cup hole 22 of the rotating body 20, based on the principle of straight line propagation of light, the light propagating in the straight line will be blocked by the annular structure constituted between the cover plate 30 and the rotating body 20, such that the light is difficult to be incident on the photosensitive device 50 at the detection port 221, so as to establish a good darkroom environment for the detection of the photosensitive device 50. In addition, the gap 311 is provided at the joint between the first light shielding member 21 and the second light shielding member 31, which can ensure that the rotating body 20 is rotatable relative to the cover plate 30. Moreover, the cup hole 22 can be kept in a normally open state, such that the accommodating slot of the base 10 is in communication with an external environment, thus avoiding the problem of difficult heat dissipation caused by complete closure. The above design can effectively solve the problem of light leakage in the darkroom by means of the annular structure for shielding light arranged between the cover plate 30 and the rotating body 20, the structure is simple, and the influence on equipment is reduced.

Technical features of the above embodiments may be arbitrarily combined within the scope defined by the appended claims. For the sake of brevity, not all possible combinations of the technical features in the above embodiments are described.

The above embodiments express only several embodiments of the invention, and the descriptions thereof are relatively specific and detailed.

## Claims

1. A light-avoiding structure for optical signal detection (100), comprising:
a base (10) provided with an accommodating slot;
a rotating body (20) rotatably connected to the base (10), the rotating body (20) being received in the accommodating slot, the rotating body (20) being provided with a first light shielding member (21), the rotating body (20) being provided with at least one cup hole (22), the cup hole (22) being provided with a detection port (221) serving as a signal input port of a photosensitive device (50); and
a cover plate (30) arranged toward the rotating body (20), the cover plate (30) covering an opening of the accommodating slot, the cover plate (30) being provided with a second light shielding member (31), the second light shielding member (31) and the first light shielding member (21) matching each other so as to form an annular structure for shielding light, and a gap (311) being provided at a joint between the second light shielding member (31) and the first light shielding member (21), the detection port (221) being located outside the first light shielding member (21) and the second light shielding member (31), and the cover plate (30) being provided with at least one hole (32);
wherein the first light shielding member (21) is a groove, and the second light shielding member (31) is a convex ring.

2. The light-avoiding structure for optical signal detection (100) according to claim 1, wherein a width of the gap (311) is no greater than 1 mm.

3. The light-avoiding structure for optical signal detection (100) according to claim 1, wherein the cover plate (30) is detachably connected to the base (10) or hinged to the base (10).

4. The light-avoiding structure for optical signal detection (100) according to claim 1, wherein a plurality of first light shielding members (21) are concentric structures arranged with a rotating shaft of the rotating body (20) as a center, and the number of the first light shielding members (21) is inversely proportional to a diameter of the cover plate (30).

5. The light-avoiding structure for optical signal detection (100) according to claim 1, wherein a plurality of second light shielding members (31) are concentric structures arranged with a rotating shaft of the rotating body (20) as a center, and the number of the second light shielding members (31) is inversely proportional to a diameter of the cover plate (30).

6. The light-avoiding structure for optical signal detection (100) according to claim 1, wherein the cover plate (30) is provided with a low-light treatment layer on a side thereof provided with the first light shielding member (21), and the rotating body (20) is provided with a low-light treatment layer on a side thereof provided with the second light shielding member (31).

7. The light-avoiding structure for optical signal detection (100) according to claim 6, wherein the low-light treatment layer is a blackening layer or a matte oxide layer.

8. The light-avoiding structure for optical signal detection (100) according to claim 1, further comprising: an actuator (40) connected to the rotating body (20) and configured to drive the rotating body (20) to rotate.

## Patentansprüche

1. Lichtvermeidungsstruktur für optische Signaldetektion (100), die Folgendes umfasst:
eine Basis (10), die mit einem Aufnahmeschlitz versehen ist;
einen Rotationskörper (20), der drehbar mit der Basis (10) verbunden ist, wobei der Rotationskörper (20) in dem Aufnahmeschlitze empfangen wird, wobei der Rotationskörper (20) mit einem ersten Lichtabschirmungselement (21) versehen ist, wobei der Rotationskörper (20) mit wenigstens einem Becherloch (22) versehen ist, wobei das Becherloch (22) mit einem Detektionsport (221) versehen ist, der als ein Signaleingangsport einer fotoempfindlichen Vorrichtung (50) dient; und
eine Deckplatte (30), die zu dem Rotationskörper (20) hin angeordnet ist, wobei die Deckplatte (30) eine Öffnung des Aufnahmeschlitzes bedeckt, wobei die Deckplatte (30) mit einem zweiten Lichtabschirmungselement (31) versehen ist, wobei das zweite Lichtabschirmungselement (31) und das erste Lichtabschirmungselement (21) derart zueinander passen, dass sie eine ringförmige Struktur zum Abschirmen von Licht bilden, und wobei ein Spalt (311) an einer Verbindungsstelle zwischen dem zweiten Lichtabschirmungselement (31) und dem ersten Lichtabschirmungselement (21) bereitgestellt ist, wobei sich der Detektionsport (221) außerhalb des ersten Lichtabschirmungselements (21) und des zweiten Lichtabschirmungselements (31) befindet und wobei die Deckplatte (30) mit wenigstens einem Loch (32) versehen ist;
wobei das erste Lichtabschirmungselement (21) eine Kerbe ist und das zweite Lichtabschirmungselement (31) ein konvexer Ring ist.

2. Lichtvermeidungsstruktur für optische Signaldetektion (100) nach Anspruch 1, wobei eine Breite des Spalts (311) nicht größer als 1 mm ist.

3. Lichtvermeidungsstruktur für optische Signaldetektion (100) nach Anspruch 1, wobei die Deckplatte (30) trennbar mit der Basis (10) verbunden oder an der Basis (10) angelenkt ist.

4. Lichtvermeidungsstruktur für optische Signaldetektion (100) nach Anspruch 1, wobei mehrere erste Lichtabschirmungselemente (21) konzentrische Strukturen sind, die mit einer Rotationswelle des Rotationskörpers (20) als ein Zentrum angeordnet sind, und die Anzahl der ersten Lichtabschirmungselemente (21) umgekehrt proportional zu einem Durchmesser der Deckplatte (30) ist.

5. Lichtvermeidungsstruktur für optische Signaldetektion (100) nach Anspruch 1, wobei mehrere zweite Lichtabschirmungselemente (31) konzentrische Strukturen sind, die mit einer Rotationswelle des Rotationskörpers (20) als ein Zentrum angeordnet sind, und die Anzahl der zweiten Lichtabschirmungselemente (31) umgekehrt proportional zu einem Durchmesser der Deckplatte (30) ist.

6. Lichtvermeidungsstruktur für optische Signaldetektion (100) nach Anspruch 1, wobei die Deckplatte (30) mit einer Niederlichtbehandlungsschicht auf einer Seite davon versehen ist, die mit dem ersten Lichtabschirmungselement (21) versehen ist, und der Rotationskörper (20) mit einer Niederlichtbehandlungsschicht auf einer Seite davon versehen ist, die mit dem zweiten Lichtabschirmungselement (31) versehen ist.

7. Lichtvermeidungsstruktur für optische Signaldetektion (100) nach Anspruch 6, wobei die Niederlichtbehandlungsschicht eine Schwärzungsschicht oder eine matte Oxidschicht ist.

8. Lichtvermeidungsstruktur für optische Signaldetektion (100) nach Anspruch 1, die ferner Folgendes umfasst: einen Aktor (40), der mit dem Rotationskörper (20) verbunden und zum Antreiben des Rotationskörpers (20) zum Drehen ausgelegt ist.

## Revendications

1. Structure anti-lumière (100) pour la détection d'un signal optique, comprenant :
une base (10) pourvue d'une fente de logement ;
un corps rotatif (20) lié à rotation à la base (10), le corps rotatif (20) étant reçu dans la fente de logement, le corps rotatif (20) étant pourvu d'un premier élément pare-lumière (21), le corps rotatif (20) étant pourvu d'au moins un trou à godet (22), le trou à godet (22) étant pourvu d'un accès de détection (221) servant d'accès d'entrée de signal d'un dispositif photosensible (50) ; et
un couvercle (30) agencé vers le corps rotatif (20), le couvercle (30) recouvrant une ouverture de la fente de logement, le couvercle (30) étant pourvu d'un deuxième élément pare-lumière (31), le deuxième élément pare-lumière (31) et le premier élément pare-lumière (21) se correspondant de manière à former une structure annulaire destinée à faire écran à la lumière, et un espace (311) étant ménagé au niveau d'une jointure entre le deuxième élément pare-lumière (31) et le premier élément pare-lumière (21), l'accès de détection (221) étant situé à l'extérieur du premier élément pare-lumière (21) et du deuxième élément pare-lumière (31), et le couvercle (30) étant pourvu d'au moins un trou (32) ;
le premier élément pare-lumière (21) étant une rainure, et le deuxième élément pare-lumière (31) étant un anneau convexe.

2. Structure anti-lumière (100) pour la détection d'un signal optique selon la revendication 1, la largeur de l'espace (311) étant inférieure ou égale à 1 mm.

3. Structure anti-lumière (100) pour la détection d'un signal optique selon la revendication 1, le couvercle (30) étant lié de façon amovible à la base (10) ou articulé sur la base (10).

4. Structure anti-lumière (100) pour la détection d'un signal optique selon la revendication 1, une pluralité de premiers éléments pare-lumière (21) prenant la forme de structures concentriques agencées avec pour centre un arbre rotatif du corps rotatif (20), et le nombre des premiers éléments pare-lumière (21) étant inversement proportionnel au diamètre du couvercle (30).

5. Structure anti-lumière (100) pour la détection d'un signal optique selon la revendication 1, une pluralité de deuxièmes éléments pare-lumière (31) prenant la forme de structures concentriques agencées avec pour centre un arbre rotatif du corps rotatif (20), et le nombre des deuxièmes éléments pare-lumière (31) étant inversement proportionnel au diamètre du couvercle (30).

6. Structure anti-lumière (100) pour la détection d'un signal optique selon la revendication 1, le couvercle (30) étant pourvu d'une couche de traitement à faible réflexion de la lumière sur son côté pourvu du premier élément pare-lumière (21), et le corps rotatif (20) étant pourvu d'une couche de traitement à faible réflexion de la lumière sur son côté pourvu du deuxième élément pare-lumière (31).

7. Structure anti-lumière (100) pour la détection d'un signal optique selon la revendication 6, la couche de traitement à faible réflexion de la lumière étant une couche obscurcissante ou une couche d'oxyde mate.

8. Structure anti-lumière (100) pour la détection d'un signal optique selon la revendication 1, comprenant en outre : un actionneur (40) lié au corps rotatif (20) et configuré pour entraîner le corps rotatif (20) en rotation.
